(19) **Europäisches Patentamt / European Patent Office / Office européen des brevets**

(11) **EP 3 687 960 B1**

(12) **EUROPEAN PATENT SPECIFICATION**

(45) Date of publication and mention of the grant of the patent:
**20.03.2024 Bulletin 2024/12**

(21) Application number: **18860881.4**

(22) Date of filing: **26.09.2018**

(51) International Patent Classification (IPC):
**C04B 40/02** *(2006.01)*    **B28B 11/24** *(2006.01)*
**C04B 28/02** *(2006.01)*    **F26B 25/12** *(2006.01)*

(52) Cooperative Patent Classification (CPC):
(C-Sets available)
**C04B 28/02; B28B 11/245; C04B 40/0231;**
Y02P 40/18        (Cont.)

(86) International application number:
**PCT/CA2018/051215**

(87) International publication number:
**WO 2019/060992 (04.04.2019 Gazette 2019/14)**

(54) **DISPLACED AIR CARBONATION (DAC) PROCESS AND SYSTEM**

VERFAHREN UND SYSTEM ZUR KARBONISIERUNG VON VERDRÄNGTER LUFT

PROCÉDÉ ET SYSTÈME DE CARBONATATION D'AIR DÉPLACÉ (DAC)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2017 US 201762564822 P**

(43) Date of publication of application:
**05.08.2020 Bulletin 2020/32**

(73) Proprietor: **Carboclave Corp.**
**Kitchener, ON N2P 2K5 (CA)**

(72) Inventors:
- **AL-GHOULEH, Zaid**
  **Montréal**
  **Québec H3G 1Z9 (CA)**
- **HARGEST, Paul Wayne**
  **Kitchener**
  **Ontario N2P 2K5 (CA)**

(74) Representative: **EDP Patent Attorneys B.V.**
**Agro Business Park 2**
**6708 PW Wageningen (NL)**

(56) References cited:
| | |
|---|---|
| WO-A1-2017/041188 | WO-A1-2017/041188 |
| CN-A- 104 290 183 | CN-U- 204 063 793 |
| JP-A- 2005 179 170 | JP-A- 2016 223 647 |
| US-A1- 2015 225 295 | US-A1- 2015 240 993 |
| US-B1- 6 706 384 | |

(52) Cooperative Patent Classification (CPC): (Cont.)

    C-Sets
    **C04B 28/02, C04B 20/0048, C04B 40/0231**

**Description**

BACKGROUND

WO 2017041188 describes the use of carbon dioxide gas to cure concrete media according to the preamble of claim 1 and a process for producing precast products in an airtight enclosure, which comprises the steps of a carbonation of pre-dried concrete precast units by feeding CO2 gas into a closed airtight enclosure under near ambient atmospheric pressure (psig between 0 and 2 (between 101.325 kPa and 115.115 kPa)) and/or low pressure (between 2 and 15 psig (between 115.115 kPa and 204.746 kPa)) conditions, wherein said pre-dried concrete units have lost between 25 to 60% of their initial mix water content.

CN104290183 describes a method for maintaining porous concrete through carbon dioxide. The method includes the following steps: (1) concrete is mixed and formed; (2) an obtained initial concrete body is placed into a pre-maintenance device for pre-maintenance, wherein the pre-maintenance temperature ranges from 15 DEG C to 25 DEG C, and the relative humidity ranges from 50% to 70%; air circulates through an air blower or a fan, wherein the pre-maintenance time ranges from 1 h to 18 h; (3) when the residual water-cement ratio of the mixed material body obtained after pre-maintenance reaches a preset residual water-cement ratio, the mixed material body is placed into a CO2 maintenance container, vacuumizing is carried out, then CO2 gas is led into the CO2 maintenance container for CO2 maintenance, the gas is discharged after maintenance is completed, and maintenance is stopped. By means of the method, control over the moisture content of the concrete body can be achieved, the carbon dioxide gas absorption capacity of the concrete can be effectively improved, and the quality of a concrete product can be effectively improved; in addition, the waste greenhouse effect gas, namely the carbon dioxide gas can be effectively used, the emission of the greenhouse gas can be reduced, the environment can be protected, and the greenhouse effect can be suppressed.

(a) Field

The subject matter disclosed generally relates to the use of carbon dioxide gas to cure concrete media by applying a pressure differential, created through a partial replacement of the original ambient volume of air present in a curing enclosure with pure $CO_2$ gas.

(b) Related Prior Art

The carbonation process engages the calcium-silicate component of Portland cement, namely, tri-calcium-silicate ($3CaO.SiO_2$; CsS - alite) and di-calcium-silicate ($2CaO.SiO_2$; $C_2S$ - belite), which make up the majority of cement. The $CO_2$ gas reacts with these calcium-silicates, in the presence of water, to form C-S-H and $CaCO_3$ (according to Equations 1 and 2 below).

$$2C_3S + 3CO_2 + 3H_2O \rightarrow C\text{-}S\text{-}H + 3CaCO_3 \qquad (1)$$

(also: $2(3CaO.SiO_2) + 3CO_2 + 3H_2O \rightarrow 3CaO.2SiO_2.3H_2O + 3CaCO_3$)

$$2C_{2S} + CO_2 + 3H_2O \rightarrow C\text{-}S\text{-}H + CaCO_3 \qquad (2)$$

(also: $2(2CaO.SiO_2) + CO_2 + 3H_2O \rightarrow 3CaO.2SiO_2.3H_{2O} + CaCO_3$)

Generally, C-S-H is known as the phase that contributes to the binding of concrete, and is one of the products normally generated by the hydraulic reaction between cement and water (along with calcium-hydroxide at a much lower extent). The rate of formation of this phase is considerably accelerated in the presence of sufficient $CO_2$, which also acts as a reacting reagent that expedites the reaction which results in the precipitation of calciumcarbonate (instead of calcium-hydroxide). For this reason, carbonation is sometimes regarded as an accelerator for the hydration of cement. Early works by Young et al. [1] and Bukowski et al. [2] showed rapid consolidation of calcium-silicate powders subject to short periods of pure $CO_2$ exposure. This physical development is correlated to the equally rapid generation of C-S-H, as per Equations 1 and 2. The CaCOs crystals that are simultaneously produced from the reaction are found intimately intermingled with the C-S-H at the nanoscale. These nano-CaCOs precipitates reinforce the C-S-H matrix, resulting in a resilient composite binding matrix.

It would be highly desirable to realize an easily adaptable industrial process that practically exploits carbonation as a means to actively engage Portland cement within the timeframe of a conventional production cycle, thus arriving at a highly resilient concrete precast product characterized for having immediate high C-S-H content, considerably higher strength than commercial benchmarks, and the capacity to beneficially sequester carbon dioxide in the form of physically-reinforcing CaCO3 crystal precipitates.

## SUMMARY

This invention presents an alternate process configuration to one covered in US Provisional Patent Application No. 62/217,239-PCT/CA2016/051076, developed to facilitate wider adoption of the Carboclave® technology in existing and new precast concrete plants. The invention introduces a new curing system that can be fairly easily integrated as a design modification to new curing installations or as a physical retrofit to curing processes already in operation. The system marginalizes carbonation's dependency on pressure for the production of Carboclave® concrete products, for whom $CO_2$ is used as the curing agent. Instead of an elevated pressure build-up to promote $CO_2$ diffusion and carbonation, the new system configuration depends on applying a pressure-differential sufficient for the reaction. The differential is achieved by displacing ambient air through suction/vacuum first, followed by $CO_2$ gas injection. The suction could result in a slight sub-atmospheric pressure, which is maintained only momentarily in an effort to purge as much air volume as technically possible by the setup. The presence of a residual volume of ambient air in the curing chamber is minimized, but realistically unavoidable. After the semi-purge, $CO_2$ injection is commenced and regulated such that carbonation is carried out at a slightly positive gauge pressure, anywhere between 0 and 2 psig (between 101.325 kPa and 115.115 kPa). Such operating conditions allow conducting carbonation curing in slightly modified conventional steam-curing chambers (the industry's benchmark production process). The presented system and associated process are assigned the abbreviation DAC, for Displaced Air Carbonation.

In accordance with the present invention, there is provided the use of carbon dioxide gas to cure concrete media according to claim 1.

The use of the present invention may further comprise an air displacement step preceding carbonation intended for creating suction and achieving sub-atmospheric pressures within the curing enclosure between 0 and -5 psig (between 101.325 kPa and 66.852 kPa).

The use of the present invention may further comprise a purging step preceding carbonation where $CO_2$ gas is continuously flowed into the curing enclosure to displace partial volumes of ambient air through an open outlet, where the outlet is closed when the exhausted air reaches a concentration of $CO_2$ that exceeds 10,000 ppm.

The curing enclosure may reach an internal $CO_2$ concentration between 20 and 50% after the purging step.

The use of the present invention may further comprise a step of regimented injection of $CO_2$ until an internal pressure between 0 and +2 psig (between 101.325 kPa and 115.115 kPa) is reached and kept constant for the duration of carbonation processing whereby the pressure differential is to create sufficient pressure-head for better gas diffusion within concrete material and to improve carbonation reaction.

The need for pressure during carbonation may be marginalized.

The use of the present invention may be for the preparation of precast or dry-cast concrete products, reinforced and non-reinforced.

The precast or dry-cast concrete products may be selected from the group consisting of masonry units, pavers, synthetic stone, bricks, hollow-core slabs, pipe, wall panels, fiber-cement boards, and retaining walls.

The concrete curing enclosure may be selected from the group consisting of kiln, chamber, autoclave, vessel, tent, wherein the enclosure is designed or modified to be air-tight and capable of withstanding marginal deviations in pressure both below and above ambient conditions.

In accordance with the present invention, there is provided a displaced air carbonation system using carbon dioxide gas to cure concrete media according to claim 10.

The door assembly may be constructed from any one or a combination of materials that include polymer, plastic, aluminum, and/or steel.

The composite inner lining may consist of a primary layer of Spray Polyurethane Foam (SPF) ranging in thickness from 25 to 50 mm, and a secondary layer of polyurea ranging between 2 and 10 mm thickness, where the composite lining is intended to alleviate internal stresses arising from the system's applied pressure differential.

In accordance with the present invention, there is provided a kit to transform a chamber system into an airtight and pressurizable enclosure according to claim 13.

The composite inner lining may consist of a primary layer of Spray Polyurethane Foam (SPF) ranging in thickness from 25 to 50 mm, and a secondary layer of polyurea ranging between 2 and 10 mm thickness.

Features and advantages of the subject matter hereof will become more apparent in light of the following detailed description of selected embodiments, as illustrated in the accompanying figures. As will be realized, the subject matter disclosed and claimed is capable of modifications in various respects, all without departing from the scope of the claims. Accordingly, the drawings and the description are to be regarded as illustrative in nature, and not as restrictive and the full scope of the subject matter is set forth in the claims.

## BRIEF DESCRIPTION OF THE DRAWINGS

Further features and advantages of the present disclosure will become apparent from the following detailed description, taken in combination with the appended drawings, in which:

> Fig. 1 illustrates a process flow diagram of the DAC process for standard 20 cm concrete masonry unit (CMU) production;
> Fig. 2 illustrates a schematic illustration of a typical full-scale curing chamber converted to a DAC curing system;
> Fig. 3 illustrates a cross-section of the DAC system's composite inner wall lining;
> Fig. 4 illustrates a DAC curing system before and after commencing carbonation curing;
> Fig. 5 illustrates a DAC system prototype;
> Fig. 6 illustrates a prototype's air displacement exhaust system;
> Fig. 7 illustrates (a) enclosure loaded with standard 20 cm CMU blocks; (b) a 5mm Neoprene polymer sheet securely fastened making the enclosure air-tight; and
> Fig. 8 illustrates DAC enclosure system when deflated via suction, and when later inflated to a constant pressure of 0.5 psig (104.772 kPa) during carbonation.

It will be noted that throughout the appended drawings, like features are identified by like reference numerals.

## DETAILED DESCRIPTION

### DAC Process

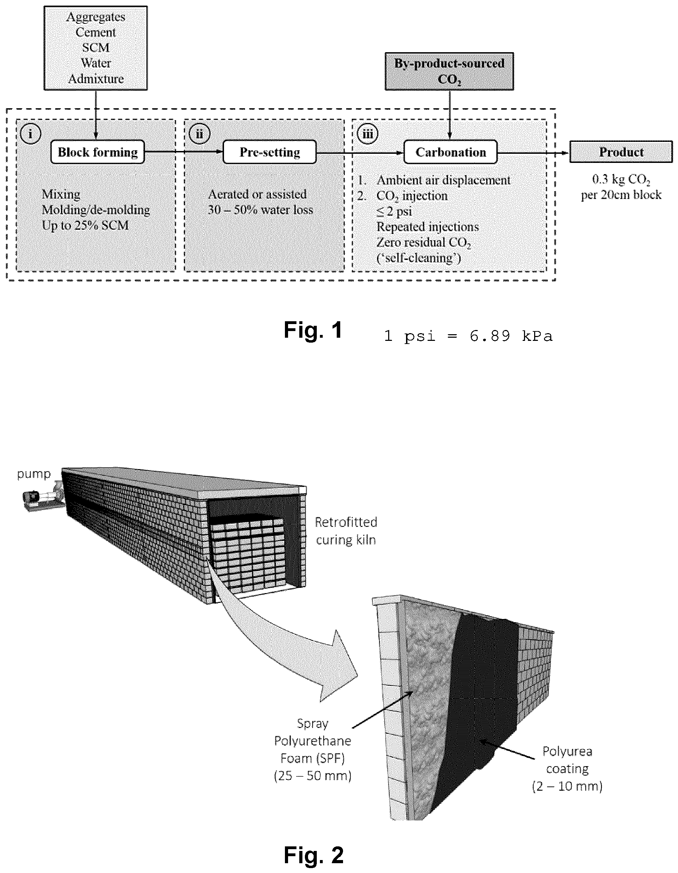

The DAC process presents a methodology for curing concrete articles using carbon-dioxide in lieu of steam (the conventional curing route). Steam generation consumes water and natural gas, both of which are averted with the DAC process. Further savings can be realized from the reduction of cement, the most expensive raw material, with no compromise in meeting building code specifications. Carboclave® concrete products outperform commercial benchmarks in areas of environmental and durability performance, as well as demonstrate considerable improvements in chemical and physical resilience. The DAC process applies to precast concrete products (steel reinforced and non-reinforced) including, but not limited to, concrete masonry units, pavers, pipes, fiber cement boards, and hollow-core slabs. The process can be adapted to existing steam curing systems through physical retrofit modifications without incurring large, non-recoverable capital costs. Fig. 1 is a process flow diagram detailing the steps of the DAC process for 20 cm CMU (concrete masonry unit) production.

The individual steps in Fig. 1 are described in more details below,

> **i. Block forming:** This step follows conventional block forming practices, with the only difference being the possibility of proportioning lower cement content. The high strength achieved by the $CO_2$-processed blocks allows for partial offset of cement content (up to 25%) through direct content reduction and/or replacement by cementitious fillers.

> **ii. Pre-setting:** Pre-setting is an important priming step, entailing the close monitoring and control of water-loss experienced by the blocks prior to carbonation. Loss of water creates spaces within the paste component of the wet blocks, thus facilitating the diffusion of $CO_2$ and achieving optimal carbonation degrees. From previous extensive parametric studies, a mass loss in the range of 30 to 50 % of the total water in the blocks yields choice results in terms of reaction. The residual water content in the block is somewhat of a critical parameter - too much and $CO_2$ diffusion is hindered as a result of blockage; too little, and cement grains do not engage in reaction due to water starvation. An optimum water content needs to be maintained prior to $CO_2$ exposure. Water in fact serves two vital purposes: it is the medium wherein the $CO_2$ gas solvates and calcium-silicates dissolve; and a reactant in the ensuing multi-step carbonation reaction that generates the composite binding matrix of C-S-H (calcium-silicate-hydrate) and $CaCO_3$.

$$\textbf{C}_2\textbf{S: } 2(3CaO.SiO_2) + 3CO_2 + 3H_2O \rightarrow 3CaO.2SiO_2.3H_2O + 3CaCO_3 \qquad (1)\,[1]$$

$$\textbf{C}_2\textbf{S: } 2(2CaO.SiO_2) + CO_2 + 3H_2O \rightarrow 3CaO.2SiO_2.3H_2O + CaCO_3 \qquad (2)\,[2]$$

Equations (1) and (2) present the generic stoichiometric reactions of cement's main constituents, tri-calcium ($C_3S$) and di-calcium silicates ($C_2S$), respectively, during carbonation. The $CO_2$ gas is ultimately converted into stable $CaCO_3$. Both C-S-H and $CaCO_3$ nucleate in pores previously occupied by water in the wet paste. The C-S-H hydrate is generally known to be responsible for the binding strength of hardened concrete. The rate of formation of this phase is considerably accelerated when calcium-silicates are activated by $CO_2$. Early works by Young et al. [1] and Bukowski et al. [2] showed rapid consolidation of calcium-silicate powders subject to short periods of pure $CO_2$ exposure, where they correlate the effect to an equally rapid generation of C-S-H.

Drying was quantified by monitoring the weight change experienced by representative blocks. The sought drying degree was simplified to an absolute final target weight, based on the formula of Equation 3, which also takes into account the aggregates' absorption property. The equation calculates the weight drop that needs to be experienced by a single block, considering a target loss of 35% of the total water content in this case. Achieving the weight drop marks the end of the pre-setting step. For example, the $WL_{35\%}$ for a NW block with an initial weight of 16.8 kg, and an aggregate absorption of 3%, is 0.349 kg.

$$WL_{35\%} = [(M_{agg.}\ x\ A_{agg.}) + (M_{block}\ x\ \%\ Water)]\ x\ 35\% \qquad (3)$$

| | |
|---|---|
| $WL_{35\%}$ | Mass of 35% target water loss |
| $M_{Agg.}$: | Mass of aggregates in block |
| $A_{Agg.}$: | Absorption of aggregates |
| $M_{Block}$: | Mass of block |

**iii. Carbonation:** This step is carried out after the suitably primed concrete products are placed in a curing enclosure and sealed. Once secured air-tight, the enclosure is subject to suction (via use of pump, venturi, compressor, etc...) for the partial displacement of the ambient volume of air originally present in the enclosure. This can result in a partial vacuum state, possibly recording sub-atmospheric pressures within the enclosure between 0.00 and -5.00 psig (between 101.325 kPa and 66.852 kPa). This state is held only briefly until the pressure is brought back to atmospheric (0 psig (101.325 kPa)), and up to a maximum of 2.00 psig (115.115 kPa), with the injection of $CO_2$ gas. The main purpose of the -ve/+ve pressure differential is to create sufficient pressure-head for better gas diffusion within the concrete material, and, therefore, improved carbonation reaction.

During carbonation, the injection of $CO_2$ gas is carefully regimented to ensure that the concrete media soaks its targeted capacity of $CO_2$ for the given curing conditions and timeframe. This 'self-cleaning' feature was developed to make sure that the injected gas is fully consumed by the concrete - avoiding gas release to the atmosphere at the end of the carbonation cycle. A regulator is used to ensure that the carbonation pressure (between 0 and 2 psig (between 101.325 kPa and 115.115 kPa)) within the enclosure is precisely maintained. A pressure drop ensues when concrete absorbs $CO_2$, prompting the regulator to counter by replenishing the enclosure with more gas. A flowmeter is used to quantify the total amount of $CO_2$ injected. Once the target capacity of gas that could be absorbed by the concrete charge is reached, the gas supply is then stopped.

To quantify the amount of $CO_2$ that can be absorbed by a concrete charge, Eq. 4 can be used. This will enable precise proportioning of gas injection during carbonation.

$$Q_{CO2} = N \times M_{unit} \times (\%Binder) \times U_{CO2} \qquad (4)$$

Where,

| | |
|---|---|
| $Q_{CO2}$: | Quantity of total $CO_2$ gas to be injected per charge, Kg |
| N: | Number of concrete units charged for curing (e.g. blocks, pavers, pipes) |
| $M_{unit}$: | Average mass of an individual unit, Kg |
| %Binder: | % proportion of binder (i.e. cement) in concrete mix design, % |
| $U_{CO2}$: | Target $CO_2$ uptake, expressed as % binder mass (usually between 15 - 25 %), % |

Equation 4 generally applies to precast concrete. From extensive previous trials, the amount of $CO_2$ that could potentially be sequestered by a concrete unit ($U_{CO2}$), under the prescribed processing conditions, is conservatively assumed equivalent to 20% of the initial mass of cement. For example, considering 10 standard normal-weight 20cm concrete masonry units (CMU), with an average weight of 17 kg per unit and a cement content of 9.7%, the quantity of CO2 that could potentially be absorbed by the charge is 3.3 kg ($Q_{CO2}$ = 10 x 17kg x 9.7% x 20%).

**DAC System**

The assembly of the DAC curing system is detailed in this section, with the described embodiment adaptable to both new and existing steam curing installations. Adaptation generally transforms any curing system (kiln, vessel, chamber, etc...) into an air-tight enclosure, capable of withstanding a pressure differential ranging from -5 psig (66.852 kPa) during suction and up to 2 psig (115.115 kPa) during carbonation. Figure 2 illustrates a typical full-scale DAC curing system, representing a modified version of the most commonly used steam-curing chamber. The inset of the figure is a close-up of the wall cross section, which reveals a composite inner lining composed of two successively sprayed layers. The wall cross section reveals a composite polyurethane/polyurea inner lining. The first layer is a 25 - 50 mm thick Spray Polyurethane Foam (SPF) material, usually used for insulation purposes in construction. The second layer is that of a flexible 'polyurea' material ranging in thickness between 2 and 10 mm. Both materials exhibit high tolerance for elastic deformation.

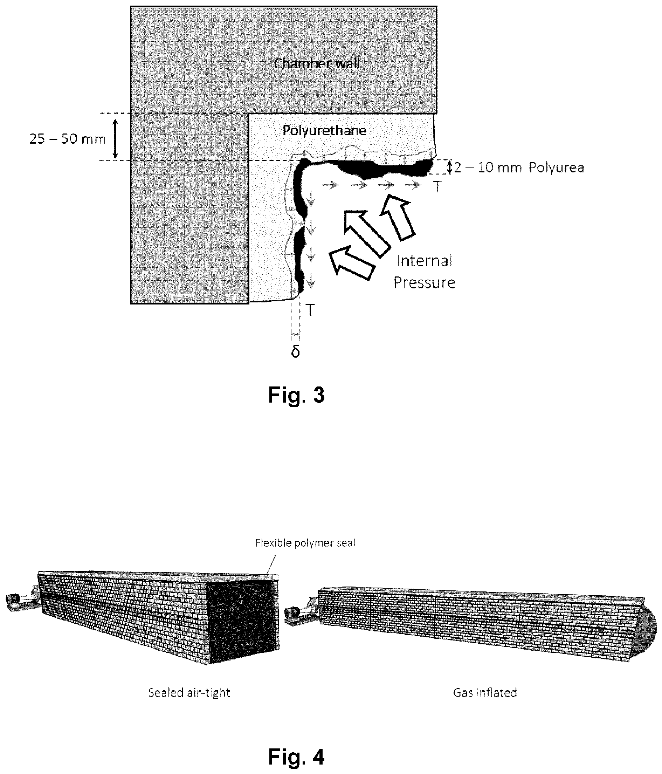

The composite lining alleviates stresses acting on the interior walls of the enclosure and arising from the applied pressure differential. It creates a bladder-like compartment that considerably negates dimensional changes imposed during operation. The air displacement step prior to carbonation is administered to create suction and achieve a sub-atmospheric pressure anywhere between 0 and -5 psig (between 101.325 kPa and 66.852 kPa). However, the vacuum effect is kept marginal to avoid delamination of the inner lining. When the concrete-loaded enclosure is inflated during carbonation, the internal pressure buildup is mostly contained by the lining through material tension and deformation. Figure 3 illustrates the internal load dissipation during inflation. The polyurea layer experiences a slight volumetric expansion, which translates into tensile forces within the material. The expansion additionally results in the dimensional deformation of the SPF layer ($\delta$), which in turn absorbs some of the load created by the internal pressure. The dual alleviation effect presented by the composite inner lining minimizes the direct pressure acting on the actual chamber walls. In this manner, a non-compressible chamber can be converted into an airtight, compressible curing setup, without incurring any major structural modifications to the chamber.

There are many types of sprayed and non-sprayed polyurethane foam and polyurea coatings that can be used whose composition, density, and mechanical properties vary significantly. Not to restrict the invention to using a specific product or brand, a general material conformity criteria is presented to ensure proper application of the inner lining component. The primary foam (SPF or other spray foams) layer needs to be adhesive, porous, and slightly malleable such that it is elastically compressible when a load is acting on the inner lining. The SPF layer is preferred to be medium-density closed-cell spray foam (ccSPF). Light-density open-cell spray foam (ocSPF) can also be used. The secondary polyurea layer (or other equivalent spray polymer or elastomer material) needs to be seamless, highly adhesive, and possess superior tensile strength (>20 MPa) and capable of achieving >200% elongation. Self-healing elastomer polyurea can also be used. In general, any lining system, comprised of one or more components, conforming to the abovementioned attributes, and serving the intended functionality, can be interchangeable with the prescribed embodiments.

Another important feature of the DAC system is the door assembly, where a flexible polymer sheet is used and affixed to the open-end of the enclosure. After the concrete charge is loaded, the polymer door is tightly fastened/clamped such that the enclosure is completely air-tight. The thickness of the door can be adjusted according to the required tensile properties (> 20 MPa). Prior to carbonation, the suction pump is used to partially displace the ambient volume of air present in the enclosure. The flexible polymer door provides a visual indicator for this step, where the sheet would deflate internally. Once a sufficient amount of air is exhausted, carbonation is commenced by injecting $CO_2$ gas until the enclosure becomes inflated and an internal pressure between 0 and 2 psig (between 101.325 kPa and 115.115 kPa) is maintained throughout the course of carbonation. Again, the polymer sheet protrudes outward during carbonation, as shown in Fig. 4. Carbonation is prolonged until the target quantity of $CO_2$ ($Q_{CO2}$) is fully injected.

## Proof-of-concept

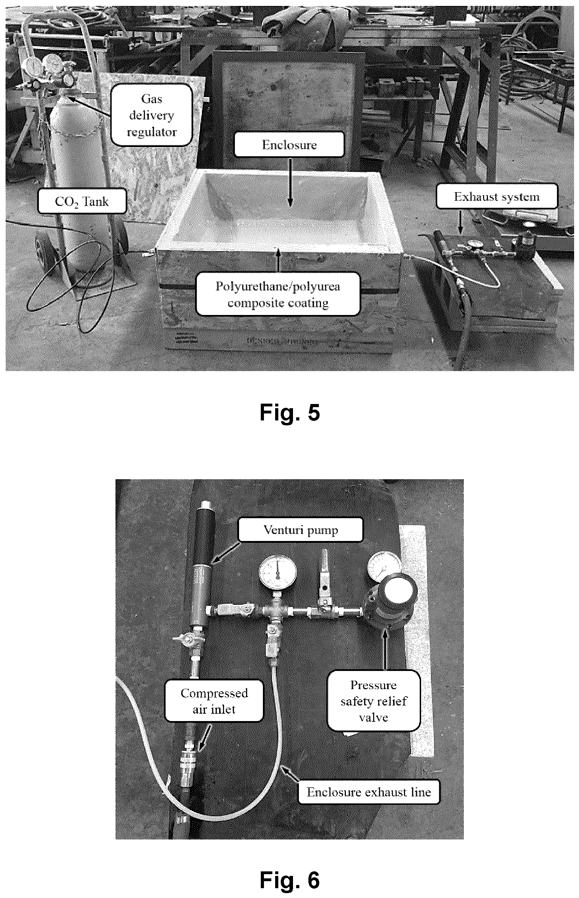

A scaled-down proof-of-concept of the DAC system and process was carried out at the site of a concrete masonry unit (CMU) plant. Locally produced CMU blocks were subjected to DAC processing using the prototype shown in Fig. 5. For the enclosure, a wooden box was used with its interior first sprayed with a 50 mm thick SPF layer (Bayseal 2.7 Insulthane by Elastochem), followed by a 2 mm layer of polyurea (9511 HT by Elastochem). High-purity liquefied CO2 gas was used, with injection controlled by a fine range valve and regulator. Fig. 6 shows the air displacement exhaust system. A venturi pump was used to create the suction needed to partially displace the ambient volume of air prior to carbonation.

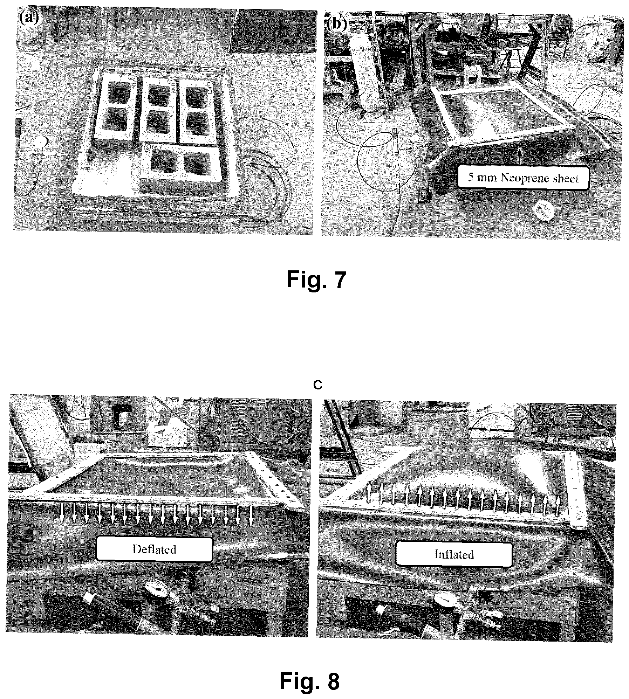

Once the primed concrete blocks are placed inside the enclosure (Fig. 7(a)), a 5mm Neoprene polymer sheet is securely fastened using screws and a high-pressure sealant (X-Trasil H.T.), as shown in Fig. 7(b). Air within the enclosure was then evacuated using the venturi pump, with the pressure gauge reading a sub-atmospheric pressure of -3 psig (80.641 kPa) after 5 to 10 minutes. The resulting suction resulted in an inward deflection of the polymer sheet, like shown in Fig. 8. The injection of $CO_2$ gas was commenced shortly after until a positive pressure of 0.5 psig (104.772 kPa) was achieved and maintained throughout the carbonation step, which lasted about 10 hours. Fig. 8 also shows the inflated state of the enclosure during carbonation. Carbonation was prolonged until the target quantity of $CO_2$, that could be absorbed by the blocks, was supplied ($Q_{CO2}$ = 1.33 kg $CO_2$ using Eq. 4).

The final blocks achieved an average $CO_2$ uptake of 310 g and an average 1-day compressive strength of 38 MPa.

While preferred embodiments have been described above and illustrated in the accompanying drawings, it will be evident to those skilled in the art that modifications may be made without departing from the scope of the appended claims.

**References:**

Young, J.F.; Berger, R.L.; Breese, J. 1974. Accelerated Curing of Compacted Calcium silicate Mortars on Exposure to CO2. Journal of the American Ceramic Society 57(9), 394-397.
Bukowski, J.M.; Berger, R.L. 1979. Reactivity and Strength Development of CO2 Activated Non-Hydraulic Calcium Silicates. Cement and Concrete Research 9(1), 57-68.

**Claims**

1. Use of carbon dioxide gas to cure concrete media by applying a pressure differential created through a partial replacement of the original ambient volume of air present in an airtight and pressurizable curing enclosure with pure $CO_2$ gas, **characterized in that** the curing enclosure comprises a composite polyurethane/polyurea sprayed inner lining.

2. The use of claim 1, comprising an air displacement step preceding carbonation intended for creating suction and achieving sub-atmospheric pressures within the curing enclosure between 101.325 kPa (0 psig) and 66.852 kPa (-5 psig).

3. The use of claim 1, comprising a purging step preceding carbonation where $CO_2$ gas is continuously flowed into the curing enclosure to displace partial volumes of ambient air through an open outlet, where the outlet is closed when the exhausted air reaches a concentration of $CO_2$ that exceeds 10,000 ppm.

4. The use of claim 3, wherein after the purging step, the curing enclosure reaches an internal $CO_2$ concentration between 20 and 50%.

5. The use of claims 2-4, comprising a further step of regimented injection of $CO_2$ until an internal pressure between 101.325 kPa (0 psig) and 115.115 kPa (+2 psig) is reached and kept constant for the duration of carbonation processing whereby the pressure differential is to create sufficient pressure-head for better gas diffusion within concrete material and to improve carbonation reaction.

6. The use of claims 1 - 5 wherein a need for pressure during carbonation is marginalized.

7. The use of claim 1 for the preparation of precast or dry-cast concrete products, reinforced and non-reinforced.

8. The use of claim 7, wherein the precast or dry-cast concrete products are selected from the group consisting of masonry units, pavers, synthetic stone, bricks, hollow-core slabs, pipe, wall panels, fiber-cement boards, and retaining walls.

9. The use of claims 1 - 8 wherein the concrete curing enclosure is selected from the group consisting of kiln, chamber, autoclave, vessel, tent, wherein the enclosure is designed or modified to be air-tight and capable of withstanding marginal deviations in pressure both below and above ambient conditions.

10. A displaced air carbonation system using carbon dioxide gas to cure concrete media which comprises,

    • an airtight and pressurizable chamber with a flexible or rigid door assembly, wherein a pressure differential is applied and created through the partial replacement of original ambient volume of air present in a curing enclosure with pure $CO_2$ gas, **characterized in that** said chamber has a composite polyurethane/polyurea sprayed inner lining.

11. The displaced air carbonation system of claim 10, wherein the door assembly is constructed from any one or a combination of materials that include polymer, plastic, aluminum, and/or steel.

12. The displaced air carbonation system of claim 10 or 11, wherein the composite inner lining consists of a primary layer of Spray Polyurethane Foam (SPF) ranging in thickness from 25 to 50 mm, and a secondary layer of polyurea ranging between 2 and 10 mm thickness, where the composite lining is intended to alleviate internal stresses arising from the system's applied pressure differential.

13. A kit to transform a chamber system into an airtight and pressurizable enclosure comprising

- a composite polyurethane/polyurea sprayed inner lining
- a polymer sheet door assembly.

14. The kit of claim 13, wherein the composite inner lining consists of a primary layer of Spray Polyurethane Foam (SPF) ranging in thickness from 25 to 50 mm, and a secondary layer of polyurea ranging between 2 and 10 mm thickness.


**Patentansprüche**

1. Verwendung von Kohlendioxidgas zur Härtung von Betonmedien durch Anwendung einer Druckdifferenz, die durch teilweisen Ersatz des ursprünglich vorhandenen Umgebungsluftvolumens in einer luftdichten und druckbeaufschlagbaren Härtungsumhüllung durch reines $CO_2$-Gas erhalten wird, **dadurch gekennzeichnet, dass** die Härtungsumhüllung eine gesprühte Polyurethan/Polyharnstoff-Verbundstoff-Innenauskleidung umfasst.

2. Verwendung gemäß Anspruch 1, umfassend einen Luftverdrängungsschritt vor der Carbonisierung, vorgesehen zum Erzeugen von Saugwirkung und Erzielen von subatmosphärischen Drucken innerhalb der Härtungsumhüllung zwischen 101,325 kPa (0 psig) und 66,852 kPa (-5 psig).

3. Verwendung gemäß Anspruch 1, umfassend einen Spülschritt vor der Carbonisierung, wobei $CO_2$-Gas kontinuierlich in die Härtungsumhüllung geleitet wird, um Teilvolumen von Umgebungsluft durch einen offenen Auslass zu verdrängen, wobei der Auslass geschlossen wird, wenn die ausgestoßene Luft eine Konzentration von $CO_2$ erreicht, die 10.000 ppm übersteigt.

4. Verwendung gemäß Anspruch 3, wobei nach dem Spülschritt die Härtungsumhüllung eine innere $CO_2$-Konzentration zwischen 20 und 50 % erreicht.

5. Verwendung gemäß Ansprüchen 2-4, umfassend einen weiteren Schritt des regulierten Einspritzens von $CO_2$, bis ein Innendruck zwischen 101,325 kPa (0 psig) und 115,115 kPa (+2 psig) erreicht ist und für die Dauer der Carbonisierungsbehandlung konstant gehalten wird, wobei die Druckdifferenz zum Erzeugen von ausreichender Druckhöhe für bessere Gasdiffusion in Betonmaterial und zum Verbessern der Carbonisierungsreaktion ist.

6. Verwendung gemäß Ansprüchen 1-5, wobei ein Bedarf an Druck während der Carbonisierung gering ist.

7. Verfahren gemäß Anspruch 1 zur Herstellung von vorgefertigten oder Trockenguss-Betonprodukten, verstärkt und nichtverstärkt.

8. Verfahren gemäß Anspruch 7, wobei die vorgefertigten oder Trockenguss-Betonprodukte ausgewählt sind aus der Gruppe bestehend aus Mauereinheiten, Pflastersteinen, synthetischem Stein, Ziegeln, Hohlkernplatten, Rohren, Wandplatten, Faserzementplatten und Stützmauern.

9. Verwendung gemäß Ansprüchen 1-8, wobei die Betonhärtungsumhüllung ausgewählt ist aus der Gruppe bestehend aus Ofen, Kammer, Autoklav, Gefäß, Zelt, wobei die Umhüllung dafür ausgelegt oder modifiziert ist, luftdicht und fähig zu sein, geringfügigen Druckabweichungen sowohl unter als auch über Umgebungsbedingungen zu widerstehen.

10. Carbonisierungssystem mit Luftverdrängung unter Verwendung von Kohlendioxidgas zur Härtung von Betonmedien, umfassend:

- eine luftdichte und druckbeaufschlagbare Kammer mit einer flexiblen oder starren Türbaugruppe, wobei eine Druckdifferenz durch den teilweisen Ersatz von ursprünglich vorhandenem Umgebungsluftvolumen in einer Härtungsumhüllung durch reines $CO_2$-Gas angewendet und erzeugt wird,

**dadurch gekennzeichnet, dass** die Kammer eine gesprühte Polyurethan/Polyharnstoff-Verbundstoff-Innenauskleidung aufweist.

11. Carbonisierungssystem mit Luftverdrängung gemäß Anspruch 10, wobei die Türbaugruppe aus einem beliebigen oder einer Kombination von Materialien, die Polymer, Kunststoff, Aluminium und/oder Stahl umfassen, hergestellt ist.

12. Carbonisierungssystem mit Luftverdrängung gemäß Anspruch 10 oder 11, wobei die Verbundstoff-Innenauskleidung aus einer Primärschicht von Polyurethan-Sprühschaum (SPF) mit einer Dicke in dem Bereich von 25 bis 50 mm und einer sekundären Schicht von Polyharnstoff mit einer Dicke in dem Bereich zwischen 2 und 10 mm besteht, wobei die Verbundstoffauskleidung zum Mildern von inneren Spannungen, die durch die angelegte Druckdifferenz des Systems entstehen, vorgesehen ist.

13. Kit zum Umwandeln eines Kammersystems in eine luftdichte und druckbeaufschlagbare Umhüllung, umfassend:

   • eine gesprühte Polyurethan/Polyharnstoff-Verbundstoff-Innenauskleidung,
   • eine Polymerbahn-Türbaugruppe.

14. Kit gemäß Anspruch 13, wobei die Verbundstoff-Innenauskleidung aus einer Primärschicht von Polyurethan-Sprühschaum (SPF) mit einer Dicke in dem Bereich von 25 bis 50 mm und einer sekundären Schicht von Polyharnstoff mit einer Dicke in dem Bereich zwischen 2 und 10 mm besteht.

## Revendications

1. Utilisation de gaz de dioxyde de carbone pour durcir des milieux de béton en appliquant un différentiel de pression créé par un remplacement partiel du volume d'air ambiant initial présent dans une enceinte de durcissement étanche à l'air et pressurisable avec du gaz de $CO_2$ pur, **caractérisée en ce que** l'enceinte de durcissement comprend une doublure intérieure pulvérisée avec un composite polyuréthane/polyurée.

2. Utilisation selon la revendication 1, comprenant une étape de déplacement d'air qui précède la carbonatation destinée à créer une succion et atteindre des pressions sub-atmosphériques dans l'enceinte de durcissement entre 101,325 kPa (0 psig) et 66,852 kPa (-5 psig).

3. Utilisation selon la revendication 1, comprenant une étape de purge qui précède la carbonatation où du gaz de $CO_2$ s'écoule de manière continue dans l'enceinte de durcissement pour déplacer des volumes partiels d'air ambiant par le biais d'une sortie ouverte, où la sortie est fermée lorsque l'air évacué atteint une concentration de $CO_2$ qui dépasse 10 000 ppm.

4. Utilisation selon la revendication 3, après l'étape de purge, l'enceinte de durcissement atteignant une concentration interne en $CO_2$ comprise entre 20 et 50 %.

5. Utilisation selon les revendications 2 à 4, comprenant une étape supplémentaire d'injection contrôlée de $CO_2$ jusqu'à ce qu'une pression interne entre 101,325 kPa (0 psig) et 115,115 kPa (+2 psig) soit atteinte et maintenue constante pour la durée du traitement de carbonatation moyennant quoi le différentiel de pression est pour créer une pression en tête suffisante pour une meilleure diffusion de gaz dans le matériau de béton et pour améliorer la réaction de carbonatation.

6. Utilisation selon les revendications 1 à 5, un besoin de pression pendant la carbonatation étant marginalisé.

7. Utilisation selon la revendication 1 pour la préparation de produits de béton préfabriqués ou coulés à sec, renforcés et non renforcés.

8. Utilisation selon la revendication 7, les produits de béton préfabriqués ou coulés à sec étant choisis dans le groupe constitué par des unités de maçonnerie, des pavés, de la pierre synthétique, des briques, des dalles à noyau creux, une conduite, des panneaux muraux, des panneaux de fibrociment et des murs de soutènement.

9. Utilisation selon les revendications 1 à 8, l'enceinte de durcissement de béton étant choisie dans le groupe constitué par un four, une chambre, un autoclave, une cuve, une tente, l'enceinte étant conçue ou modifiée pour être étanche à l'air et être capable de résister à des déviations marginales de pression à la fois en dessous et au-dessus des conditions ambiantes.

10. Système de carbonatation d'air déplacé utilisant du gaz de dioxyde de carbone pour durcir des milieux de béton qui comprend :

• une chambre étanche à l'air et pressurisable dotée d'un ensemble porte flexible ou rigide, un différentiel de pression étant appliqué et créé par le biais du remplacement partiel du volume d'air ambiant initial présent dans une enceinte de durcissement avec du gaz de $CO_2$ pur, **caractérisé en ce que** ladite chambre possède une doublure interne pulvérisée avec un composite polyuréthane/polyurée.

11. Système de carbonatation d'air déplacé selon la revendication 10, l'ensemble porte étant construit à partir d'un quelconque ou une combinaison de matériaux qui comprend un polymère, une matière plastique, l'aluminium et/ou l'acier.

12. Système de carbonatation d'air déplacé selon la revendication 10 ou 11, la doublure interne composite étant constituée d'une couche primaire de mousse de polyuréthane pulvérisée (SPF) d'une épaisseur dans la plage de 25 à 50 mm, et d'une couche secondaire de polyurée d'une épaisseur dans la plage entre 2 et 10 mm, où la doublure composite est destinée à soulager des contraintes internes provenant du différentiel de pression appliqué au système.

13. Kit pour transformer un système de chambre en une enceinte étanche à l'air et pressurisable comprenant

• une doublure interne pulvérisée avec un composite polyuréthane/polyurée
• un ensemble porte à feuille de polymère.

14. Kit selon la revendication 13, la doublure interne composite étant constituée d'une couche primaire de mousse de polyuréthane pulvérisée (SPF) d'une épaisseur dans la plage de 25 à 50 mm, et d'une couche secondaire de polyurée d'une épaisseur dans la plage entre 2 et 10 mm.

**Fig. 1**    1 psi = 6.89 kPa

**Fig. 2**

**Fig. 3**

**Fig. 4**

**Fig. 5**

**Fig. 6**

(a) (b) 5 mm Neoprene sheet

Fig. 7

c

Deflated | Inflated

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017041188 A
- CN 104290183
- US 62217239
- CA 2016051076 W

### Non-patent literature cited in the description

- **YOUNG, J.F. ; BERGER, R.L. ; BREESE, J.** Accelerated Curing of Compacted Calcium silicate Mortars on Exposure to CO2. *Journal of the American Ceramic Society,* 1974, vol. 57 (9), 394-397
- **BUKOWSKI, J.M. ; BERGER, R.L.** Reactivity and Strength Development of CO2 Activated Non-Hydraulic Calcium Silicates. *Cement and Concrete Research,* 1979, vol. 9 (1), 57-68